# FASCICULE DE BREVET EUROPEEN

(11) **EP 1 160 385 B1**
(45) Date de publication et mention de la délivrance du brevet: **11.08.2004**
(21) Numéro de dépôt: 01401080.5
(22) Date de dépôt: 26.04.2001
(51) Int. Cl.: E02D 31/12, E03F 11/00, B65D 88/76

(54) **Procédé et dispositif d'ancrage d'un récipient dans une fosse**
Verfahren und Einrichtung zum Ankern eines Behälters in einem Graben
Process and apparatus for anchoring a container inside a pit

(30) Priorité: 31.05.2000 FR 0007007
(43) Date de publication de la demande: 05.12.2001
(73) Titulaire: GLI International, 75008 Paris (FR)
(72) Inventeur: Halgand, Guy, c/o Gaz Liquefies Industrie, 75008 Paris (FR); Bregnon, Romuald, c/o Gaz Liquefies Industrie, 75008 Paris (FR)
(74) Mandataire: Lerner, François

(56) Documents cités:
- EP-A- 0 758 617
- DE-A- 19 520 363
- DE-A- 19 914 917
- US-A- 4 324 508
- US-A- 5 848 776

## Description

L'invention a pour objet un procédé de mise en place dans une fosse d'un récipient de grand volume tel par exemple qu'une citerne, un réservoir de gaz liquéfié, une fosse septique, etc..

Un problème important qui peut se poser avec de telles installations est que, en cas d'envahissement par de l'eau, par exemple à la suite d'une inondation, il ne faut pas que le récipient, du fait de sa flottabilité, puisse se déplacer dans sa fosse sous l'effet de la poussée d'Archimède qu'il va subir, risquant de rompre les canalisations, voire de s'échapper de la fosse, avec tous les problèmes de pollution et les risques d'explosion et d'incendie corrélatifs.

En ce qui concerne plus précisément les citernes de gaz liquéfié, leur enfouissement n'est en particulier autorisé que sous condition de respecter un cahier des charges très strict notamment en matière de protection contre la corrosion (traitement de surface et protection cathodique), méthodes d'enfouissement (remblaiement avec du sable ou protection mécanique du réservoir), système de surveillance, etc...

Dans son brevet antérieur France FR-2 727 997, le demandeur a proposé un procédé et un dispositif pour la mise et le maintien en place dans une fosse d'un récipient de grand volume. Dans ce procédé et ce dispositif on enveloppe le récipient dans une bâche que l'on referme autour du récipient en enfermant entre la bâche le récipient suffisamment de matière de remblais pour que le poids de ces remblais enfermés sous la bâche soit suffisant pour empêcher le récipient de se déplacer sous l'effet d'une inondation même si le récipient est vide.

D'autre part, EP-A-0 758.617 décrit un procédé consistant, après avoir réalisé la fosse par tout procédé connu, tel notamment qu'excavation du terrain dans lequel la fosse est ménagée, à :
a/ mettre en place dans la fosse, sous le récipient (1), un élément d'ancrage,
b/ tendre autour du récipient des sangles (3,4,10) à résistance mécanique et tenue dans le temps suffisantes pour l'utilisation envisagée,
c/ fixer par tout moyen approprié lesdites sangles audit élément d'ancrage,
d/ remblayer la fosse,
e/ la surface dudit élément d'ancrage étant calculée en fonction de l'effort maximal d'arrachement que lesdites sangles pourraient exercer sur lui en cas de risque maximum, c'est-à-dire de flottaison en cas d'envahissement d'eau, le récipient étant vide, pour que les forces de frottement entre l'élément d'ancrage et les remblais soient supérieures audit effort d'arrachement.

Le procédé de la présente invention propose une autre technique plus simple à mettre en oeuvre et plus économique, et en même temps plus fiable.

Conformément à l'invention telle que définie par la revendication 1 annexée, il est proposé d'utiliser un élément d'ancrage de raideur relativement faible et de faible épaisseur rapportée à sa longueur et sa largeur, tel qu'un grillage, une feuille ou analogue à résistance mécanique et tenue dans le temps suffisantes pour l'utilisation envisagée.

Ainsi, l'élément d'ancrage peut être fabriqué en grande série, stocké en rouleau et ensuite découpé à la dimension souhaitée.

Selon une autre caractéristique de l'invention, l'élément d'ancrage est tendu sensiblement horizontalement sous le récipient.

Le dispositif de l'invention se caractérise quant à lui en ce qu'il comporte, dans une installation à récipient enterré dans une fosse remblayée, un élément d'ancrage de raideur relativement faible et de faible épaisseur rapportée à ses autres dimensions, tel qu'un grillage, une feuille ou analogue de résistance mécanique et de tenue dans le temps appropriées, disposé sous le récipient, des sangles tendues autour du récipient et fixées par endroits audit élément d'ancrage, la surface de l'élément d'ancrage étant ainsi calculée que la résistance à l'arrachement de l'élément d'ancrage noyé dans les remblais est supérieure à l'effort maximal que lesdites sangles pourraient exercer sur l'élément d'ancrage en cas de risque maximum, c'est-à-dire de flottaison en cas d'envahissement d'eau, le récipient étant vide.

Le principe de l'invention comme on le comprend de ce qui précède part d'une nouvelle idée, à savoir qu'un élément d'ancrage noyé dans des terrains est extrêmement difficile à déplacer, même lorsque l'élément d'ancrage est de raideur relativement faible. En outre, la fabrication d'un tel élément d'ancrage de résistance mécanique appropriée et de tenue garantie dans le temps est très bien maîtrisée aujourd'hui et très économique.

La force de retenue dans les terrains de l'élément d'ancrage est fonction de la nature du terrain, de la nature de l'élément d'ancrage et de la profondeur à laquelle l'élément d'ancrage est noyé dans les terrains, profondeur qui détermine la pression des terrains exercée sur l'élément d'ancrage.

D'un autre côté, la force de soulèvement qui s'exerce sur le récipient en cas d'envahissement de la fosse par de l'eau est proportionnelle au volume de ce récipient.

En fonction des caractéristiques précises de la construction, il sera donc aisé pour l'ingénieur de calculer précisément la surface d'élément d'ancrage minimum nécessaire.

L'invention et sa mise en oeuvre apparaîtront plus clairement de la description qui va suivre de quelques modes de réalisation illustrés en référence aux dessins schématiques annexés, dans lesquels :
la figure 1 montre en vue perspective un récipient, tel par exemple qu'un réservoir pour gaz liquéfié, posé sur un élément d'ancrage tel qu'un grillage auquel il est fixé par deux sangles ;
la figure 2 montre une vue de côté de la figure 1 ;
la figure 3 est une vue à plus grande échelle, au niveau entouré III à la figure 2, de la manière dont la sangle est arrimée sur le réservoir et est fixée au grillage ;
la figure 4 montre à plus grande échelle un détail de la fixation de la sangle sur le grillage, la figure 3 correspondant à une coupe selon la ligne AA de la figure 4 ;
la figure 5 montre, comme la figure 1, une variante du procédé de l'invention ;
la figure 6 est une vue de côté de la figure 5 ;
la figure 7 est une vue à plus grande échelle du détail entouré VII de la figure 5 ;
la figure 8 montre, comme la figure 4, un détail de fixation de la sangle sur le grillage au moyen d'un jonc placé sous le grillage ; et
la figure 9 montre, comme la figure 3, l'emplacement relatif du jonc de la figure 8 sous la paroi de la cuve et sous le grillage lorsque le dispositif est en place.

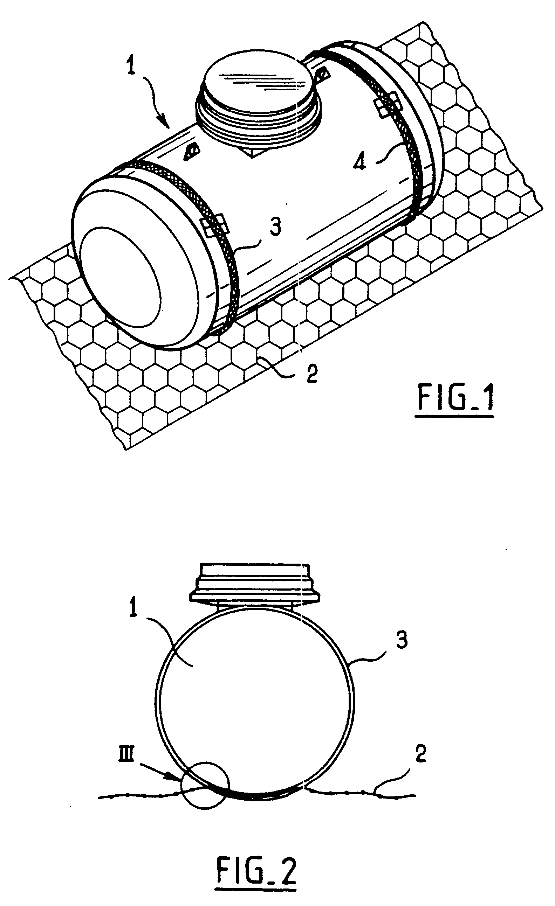

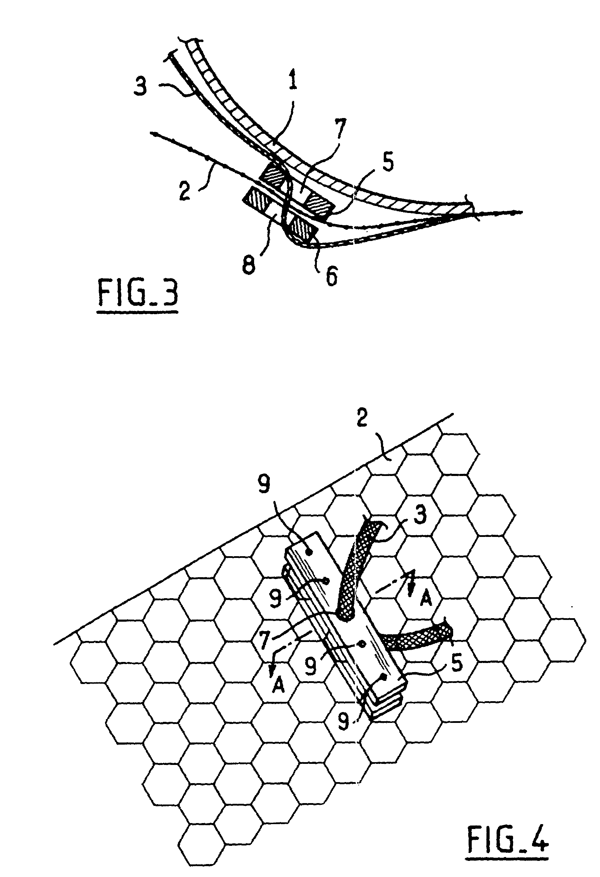

En se reportant tout d'abord aux figures 1 et 2, on a montré, sans schématiser la fosse pour ne pas surcharger les dessins, un récipient référencé 1 aux dessins, qui peut être par exemple une cuve pour gaz liquéfié, posé sur un grillage référencé 2, des sangles, précisément deux sangles référencées 3 et 4 dans la réalisation illustrée, assurant la fixation sur le grillage 2 du récipient 1, comme il sera décrit plus en détail ci-après en référence notamment aux figures 3 et 4.

À la figure 1, on aperçoit que le grillage 2 est un peu plus long que la cuve 1, et à la figure 2 on voit que le grillage 2 est nettement plus large que le diamètre de la cuve 1. Dans l'exemple illustré on a adopté une largeur de grillage allant de 1,5 à 2 fois le diamètre du récipient 1, après remblayage de la fosse (non représentée) la force de frottement exercée par le grillage 2 sur les terrains de remblayage ayant été déterminée comme suffisante pour assurer que le récipient 1 ne pourra pas se déplacer même dans les conditions les plus défavorables, si il est convenablement amarré par les sangles sur le grillage, et cela en tenant compte dans cet exemple, du volume du récipient, de la nature des terrains et du grillage, et de la profondeur d'enfouissement du récipient.

En référence aux figures 3 et 4, on a illustré une manière de fixer les sangles telles que 3 et 4 qui entourent la paroi du récipient 1 au grillage 2. Pour ce faire, on utilise deux barrettes 5,6 par-dessus et par-dessous la surface de grillage 2. Chaque barrette comporte en son centre un trou respectivement 7,8 par lequel passe la sangle, et chaque barrette comporte également de chaque côté du trou central des petits trous référencés seulement 9 sur la barrette 5 à la figure 4 par lesquels on peut passer des vis pour serrer au moyen d'écrous correspondants (non représentés) plusieurs mailles du grillage 2 entre les deux barrettes. Les trous 9 sont espacés d'une distance égale à largeur d'une maille du grillage. Dans l'exemple illustré les barrettes enferment entre elles environ cinq mailles du grillage.

Comme on le voit plus clairement de la comparaison des figures 2 et 3, dans l'exemple illustré la fixation des sangles au grillage se fait au voisinage de la paroi du récipient 1 en contact avec le grillage.

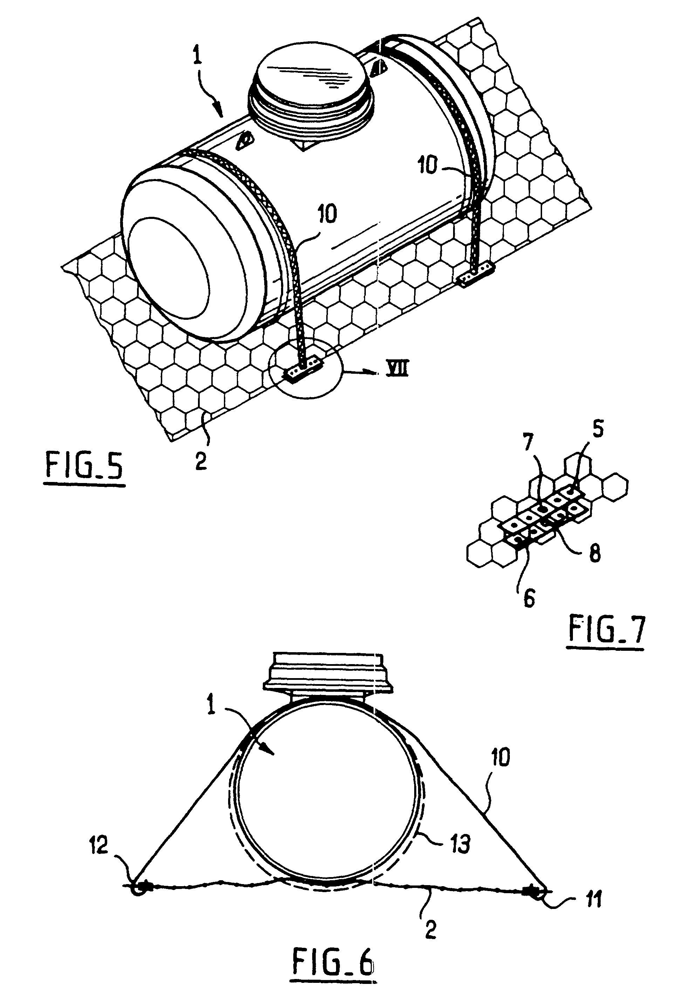

Dans la variante de réalisation illustrée aux figures 5 à 7, des sangles 10 fixent le récipient 1 au grillage 2, non plus au voisinage de la paroi du récipient en contact avec le grillage, mais vers les extrémités latéralement éloignées du grillage. La fixation des sangles est réalisée au moyen de crochets tels que schématisés en 11 et 12 à la figure 6, lesquels crochets sont fixés aux extrémités des sangles 10. Pour éviter de déchirer le grillage au niveau du point d'ancrage avec le crochet, à cet endroit le grillage 2, comme illustré à la figure 7, est avantageusement pris entre deux barrettes telles que les barrettes précédemment décrites 5 et 6 aux figures 3 et 4. Le montage étant le même ne sera pas à nouveau décrit. Et c'est dans les orifices centraux 7 et 8 des barrettes que viendront se prendre les crochets 11 et 12 d'ancrage.

Comme indiqué en trait interrompu en 13 à la figure 6, le récipient 1 peut également être amarré au grillage 2 par des sangles 13 qui viennent se fixer comme dans le mode de réalisation des figures 1 à 3 au voisinage de la paroi du récipient en contact avec le grillage. Cette solution a l'avantage de répartir plus largement les forces d'amarrage du récipient 1 au grillage 2.

En tant que grillage, on peut utiliser avantageusement un grillage en fils d'acier de 2 mm de diamètre protégés par la corrosion par un enduit de PVC. Les mailles peuvent avoir des dimensions de l'ordre de 60 à 80 mm. Dans ce cas la résistance du grillage est de l'ordre de 3.000 kg/m et le grillage peut être garanti contre la corrosion pendant au moins 30 ans.

En tant que sangles, on pourra utiliser des sangles en polyester ayant une largeur de 35 mm et une résistance à la traction de 1500 kg. Les crochets tels que 11 et 12 pourront être constitués en acier inoxydable. Les barrettes telles que 5 et 6 peuvent être constituées par des plaques en acier inoxydable ou en matière plastique de qualité appropriée, par exemple un matériau composite du type résine isophtalique armée de fibres de verre et les boulons et vis de fixation seront également avantageusement constitués en acier inoxydable ou encore en nylon (marque déposée).

Des expérimentations ont montré qu'il était ainsi possible sans aucune difficulté d'assurer la fixation d'un récipient d'un volume par exemple de 3.000 litres correspondant à une longueur d'environ 3m et un diamètre d'environ 1,20 m en le plaçant sur un grillage du type précédemment mentionné développé sur une largeur de 2m et sur la longueur du récipient et en enfouissant le récipient de façon que les terrains affleurent sensiblement sa surface supérieure.

Pour une mise sous tension correcte des sangles on utilisera avantageusement des tendeurs à cliquet bien connus dans la technique.

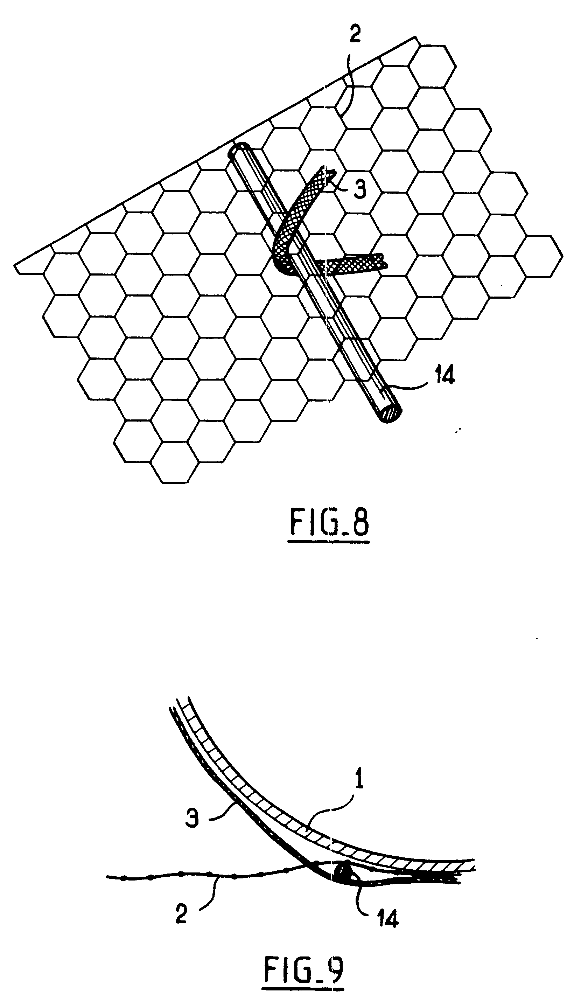

Selon la variante de réalisation illustrée aux figures 8 et 9, à la place des deux barrettes métalliques 5 et 6 du mode de réalisation illustré aux figures 3 et 4, on utilise un simple jonc d'un matériau composite référencé 14 aux dessins, la sangle 3 passant sous le jonc 14 et à l'intérieur d'au moins une maille du grillage 2. La mise en oeuvre de cette solution est plus facile que celle illustrée aux figures 3 et 4, permettant une meilleure répartition de la contrainte sur le grillage et augmentant la rigidité transversale du grillage.

Bien sûr, la qualité, la résistance dans le temps et la résistance mécanique des différents éléments du dispositif de l'invention seront chaque fois choisies en fonction des caractéristiques particulières de l'installation, ainsi que de la nature des terrains de remblayage utilisés qui permettront de déterminer en fonction du coefficient de frottement entre le grillage et les terrains la surface du grillage qui devra être déployée sous le récipient pour assurer sa tenue même en cas d'inondation alors que le récipient pourrait à ce moment être vide.

Éventuellement, si l'on veut augmenter le coefficient de frottement du grillage avec les remblais, on pourra doubler le grillage résistant par un autre grillage plus fin , voire par une toile d'un matériau plastique approprié et dont on aura préalablement déterminé la tenue dans le temps.

De même le grillage peut être remplacé par une feuille de métal déployé, ou par tout autre matériau de qualité mécanique et de résistance dans le temps appropriée, tel qu'une membrane ou une feuille plastique ou d'un matériau composite, par exemple plastique/métal, tel qu'une feuille de métal prise en sandwich entre deux feuilles de plastique protectrices.

## Revendications

1. Procédé d'ancrage dans une fosse d'un récipient de grand volume tel par exemple qu'une citerne, un réservoir de gaz liquéfié, une fosse septique, qui à vide, présente une masse suffisamment faible pour pouvoir être déplacé, notamment par flottaison en cas d'envahissement de la fosse par de l'eau, ledit procédé consistant, après avoir réalisé la fosse par tout procédé connu, tel notamment qu'excavation du terrain dans lequel la fosse est ménagée, à effectuer le opérations suivantes :
a/ mettre en place dans la fosse, sous le récipient (1), un élément d'ancrage,
b/ tendre autour du récipient des sangles (3,4,10) à résistance mécanique et tenue dans le temps suffisantes pour l'utilisation envisagée,
c/ fixer par tout moyen approprié lesdites sangles audit élément d'ancrage,
d/ remblayer la fosse,
e/ la surface dudit élément d'ancrage étant calculée en fonction de l'effort maximal d'arrachement que lesdites sangles pourraient exercer sur lui en cas de risque maximum, c'est-à-dire de flottaison en cas d'envahissement d'eau, le récipient étant vide, pour que les forces de frottement entre l'élément d'ancrage et les remblais soient supérieures audit effort d'arrachement,
ledit procédé étant **caractérisé en ce que** l'on utilise un élément d'ancrage de raideur relativement faible et de faible épaisseur rapportée à sa longueur et sa largeur, tel qu'un grillage, une feuille ou analogue (2) à résistance mécanique et tenue dans le temps suffisantes pour l'utilisation envisagée.

2. Procédé selon la revendication 1, **caractérisé en ce que** l'élément d'ancrage est tendu sensiblement horizontalement sous le récipient.

3. Procédé selon la revendication 1 ou la revendication 2, **caractérisé en ce qu'**on choisit un élément d'ancrage de longueur sensiblement équivalente à celle du récipient et de largeur déterminée par le calcul et fonction du volume du récipient, de la nature des terrains dans lesquels le récipient est enterré, de la profondeur d'enfouissement de l'élément d'ancrage et de la nature de l'élément d'ancrage utilisé.

4. Dispositif pour la mise en oeuvre du procédé selon l'une quelconque des revendications précédentes comportant, dans une installation à récipient enterré dans une fosse remblayée, un élément d'ancrage de raideur relativement faibte et de faible épaisseur rapporté à sa longueur et sa largeur, tel qu'un grillage, une feuille ou analogue (2) de résistance mécanique et de tenue dans le temps appropriées, disposé sous le récipient (1), des sangles (3,4,10) tendues autour du récipient et fixées par endroits audit élément d'ancrage, la surface de l'élément d'ancrage étant ainsi calculée que la résistance à l'arrachement de l'élément d'ancrage noyé dans les remblais est supérieure à l'effort maximal que lesdites sangles pourraient exercer sur l'élément d'ancrage en cas de risque maximum, c'est-à-dire de flottaison en cas d'envahissement d'eau, le récipient étant vide.

5. Dispositif selon la revendication 4, **caractérisé en ce que**, pour la fixation des sangles (3) à l'élément d'ancrage (2), on utilise des barrettes (5,6) de renfort serrées de part et d'autre de l'élément d'ancrage et dans lesquelles passent les sangles.

6. Dispositif selon la revendication 4, **caractérisé en ce que** l'élément d'ancrage comprend un grillage présentant des mailles et pour la fixation des sangles (3) au grillage (2), on utilise des joncs (14) d'un matériau composite qui passent sous le grillage, la sangle passant sous le jonc et dans au moins une maille du grillage.

7. Dispositif selon la revendication 4, 5 ou la revendication 6, **caractérisé en ce que** la fixation des sangles à l'élément d'ancrage est faite, au moins en partie, au voisinage de la paroi du récipient en contact avec l'élément d'ancrage..

8. Dispositif selon l'une quelconque des revendications 4 à 7, **caractérisé en ce que** la fixation des sangles à l'élémént d'ancrage est faite, au moins en partie, vers les extrémités éloignées de l'élément d'ancrage.

9. Dispositif selon la revendication 8, **caractérisé en ce que** la fixation des sangles vers les extrémités éloignées de l'élément d'ancrage se fait au moyen de crochets ou analogues (11,12) prévus à l'extrémité correspondante des sangles.

## Patentansprüche

1. Verfahren zum Ankern eines großvolumigen Behälters in einem Graben wie zum Beispiel eine Zisterne, ein Flüssiggasreservoir, eine Klärgrube, der im leeren Zustand eine ausreichend geringe Masse besitzen, um fortbewegt werden zu können, insbesondere durch den Wasserstand im Fall des Eindringens von Wasser in den Graben, wobei das Verfahren darin besteht, dass, nachdem der Graben durch irgendein bekanntes Verfahren, wie insbesondere durch Ausheben des Geländes, auf dem der Graben angelegt wird, hergestellt ist die folgenden Schritte durchgeführt werden:
a/ Anbringen eines Verankerungselements in dem Graben unter dem Behälter (1),
b/ Festziehen von Gurten (3, 4, 10) um den Behälter, die von ausreichender mechanischer Widerstandkraft und Haltbarkeit für die beabsichtigte Verwendung sind,
c/ Befestigen der Gurte mit irgendeinem geeigneten Mittel an dem Verankerungselement,
d/ Auffüllen des Grabens,
e/ wobei die Fläche des Verankerungselements als Funktion der maximalen Zugkraft berechnet ist, die die Gurte im Fall des größten Risikos auf es ausüben könnten, das heißt durch Auftrieb im Falle des Eindringens von Wasser bei leerem Behälter, so dass die Reibungskräfte zwischen dem Verankerungselement und der Auffüllung größer sind, als die Zugkraft,
wobei das Verfahren **dadurch gekennzeichnet ist, dass** man ein Verankerungselement von relativ geringer Steifigkeit und, verglichen mit seiner Länge und Breite, geringer Stärke verwendet, wie ein Drahtgeflecht oder eine Folie oder dergleichen (2) mit ausreichender mechanischer Widerstandskraft und Haltbarkeit für die beabsichtigte Nutzung.

2. Verfahren nach Anspruch 1, **dadurch gekennzeichnet, dass** das Verankerungsmittel sich im Wesentlichen horizontal unter dem Behälter erstreckt.

3. Verfahren nach Anspruch 1 oder Anspruch 2, **dadurch gekennzeichnet, dass** ein Verankerungselement von einer Länge gewählt wird, die im Wesentlichen gleich der des Behälters ist und von einer Breite, die bestimmt ist durch die Berechnung und die Abhängigkeit von dem Volumen des Behälters, der Beschaffenheit des Geländes, auf dem der Behälter vergraben wird, der Tiefe in der das Verankerungselement vergraben ist und der Beschaffenheit des verwendeten Verankerungselements.

4. Vorrichtung zur Durchführung des Verfahrens nach einem der vorhergehenden Ansprüche, bestehend, bei der Installation eines in einem verfüllten Graben eingegrabenen Behälters, aus einem Verankerungselement von relativ geringer Steifigkeit und vergleichen mit seiner Länge und Breite geringer Stärke, wie einem Drahtgeflecht, einer Folie oder dergleichen (2) mit einer geeigneten mechanischen Widerstandskraft und Haltbarkeit, das unter dem Behälter (1) angeordnet ist, Gurten (3, 4, 10), die um den Behälter gespannt sind und an Punkten an dem Verankerungselement befestigt sind, wobei die Fläche des Verankerungselements so berechnet ist, dass der Zugwiderstand des in der Auffüllung versenkten Behälters größer ist, als die Maximalkraft, die die Gurte auf das Verankerungselement im Fall des größten Risikos, das heißt des Auftriebs des leeren Behälters im Fall des Eindringens von Wasser, ausüben können.

5. Vorrichtung nach Anspruch 4, **dadurch gekennzeichnet, dass** zur Befestigung der Gurte (3) an dem Verankerungselement (2) Verstärkungsspangen (5, 6), die das Verankerungselement von beiden Seiten einklemmen und durch die die Gurte geführt sind, verwendet werden.

6. Vorrichtung nach Anspruch 4, **dadurch gekennzeichnet, dass** das Verankerungselement ein Drahtgeflecht ist, das Maschen aufweist und dass für die Befestigung der Gurte (3) an dem Drahtgeflecht (2) Stangen (14) aus einem Verbundmaterial verwendet werden, die unter dem Drahtgeflecht liegen, wobei der Gurt unter die Stange und durch wenigstens eine Masche des Drahtgeflechts geführt ist.

7. Vorrichtung nach Anspruch 4, 5 oder 6, **dadurch gekennzeichnet, dass** die Befestigung der Gurte an dem Verankerungselement wenigstens zum Teil neben der Wand des Behälters erfolgt, die mit dem Verankerungselement in Berührung steht.

8. Vorrichtung nach einem der Ansprüche 4 bis 7, **dadurch gekennzeichnet, dass** die Befestigung der Gurte an dem Verankerungselement wenigstens zum Teil an den voneinander entfernten Enden des Verankerungselements erfolgt.

9. Vorrichtung nach Anspruch 8, **dadurch gekennzeichnet, dass** die Befestigung der Gurte an den voneinander entfernten Enden des Verankerungselements durch Haken oder dergleichen (11, 12) erfolgt, die an den entsprechenden Enden der Gurte vorgesehen sind.

## Claims

1. Process for anchoring a high-volume container, such as a cistern, a liquefied gas tank or a septic tank, in a pit, where the container has such a low weight when empty that it can be displaced, particularly by floating if the pit is flooded with water, the said process consisting of the performance of the following operations, after the pit has been formed by any known process, in particular by the excavation of the ground in which the pit is created:
a) positioning an anchoring element in the pit under the container (1),
b) extending around the container straps (3, 4, 10) having sufficient mechanical strength and durability for the planned application,
c) fixing the said straps to the said anchoring element by any appropriate means,
d) filling in the pit,
e) the surface of the said anchoring element being calculated according to the maximum extraction force that the said straps could exert on it in the case of maximum risk, in other words when there is a risk of floating in case of flooding with water while the container is empty, to ensure that the frictional forces between the anchoring element and the backfill exceed the said extraction force,
the said process being **characterized in that** use is made of an anchoring element which has relatively low rigidity and a thickness which is small with respect to its length and width, such as a grid, a sheet or the like (2), having sufficient mechanical strength and durability for the planned application.

2. Process according to Claim 1, **characterized in that** the anchoring element is extended approximately horizontally under the container.

3. Process according to Claim 1 or Claim 2, **characterized in that** the anchoring element which is selected has a length approximately equal to that of the container and a width determined by calculation and in accordance with the volume of the container, the nature of the ground in which the container is buried, the depth of burial of the anchoring element and the nature of the anchoring element used.

4. Device for the application of the process according to any one of the preceding claims, comprising, in an installation with a container buried in a backfilled pit, an anchoring element which has relatively low rigidity and a thickness which is small with respect to its length and width, such as a grid, a sheet or the like (2) having appropriate mechanical strength and durability and positioned under the container (1), and straps (3,4,10) extended around the container and fixed at some points to the said anchoring element, the surface of the anchoring element being calculated in such a way that the resistance to extraction of the anchoring element buried in the backfill is greater than the maximum force that the said straps could exert on the anchoring element in the case of maximum risk, in other words where there is a risk of floating in case of flooding with water while the container is empty.

5. Device according to Claim 4, **characterized in that** the straps (3) are fixed to the anchoring element (2) by means of small reinforcing bars (5, 6) which are clamped on either side of the anchoring element and which have the straps passed through them.

6. Device according to Claim 4, **characterized in that** the anchoring element comprises a grid having cells and the straps (3) are fixed to the grid (2) by means of rods (14) of composite material which pass under the grid, each strap passing under a rod and into at least one cell of the grid.

7. Device according to Claims 4, 5 or Claim 6, **characterized in that** the fixing of the straps to the anchoring element is carried out, at least partially, in the vicinity of the wall of the container in contact with the anchoring element.

8. Device according to any one of Claims 4 to 7, **characterized in that** the fixing of the straps to the anchoring element is carried out, at least partially, at the remote edges of the anchoring element.

9. Device according to Claim 8, **characterized in that** the fixing of the straps near the remote edges of the anchoring element is carried out by means of hooks or the like (11, 12) provided at the corresponding ends of the straps.
